# EUROPÄISCHE PATENTSCHRIFT

(11) **EP 1 932 250 B1**
(45) Veröffentlichungstag und Bekanntmachung des Hinweises auf die Patenterteilung: **13.06.2012**
(21) Anmeldenummer: 06806068.0
(22) Anmeldetag: 05.10.2006
(51) Int. Cl.: H04B 5/00, G01D 9/00, G06F 13/40

(54) **DATENLOGGER FÜR EIN MESSGERÄT**
DATA LOGGER FOR A MEASUREMENT DEVICE
ENREGISTREUR DE DONNEES POUR APPAREIL DE MESURE

(30) Priorität: 05.10.2005 US 723857 P; 27.12.2005 US 754472 P
(43) Veröffentlichungstag der Anmeldung: 18.06.2008
(73) Patentinhaber: VEGA Grieshaber KG, 77709 Wolfach (DE)
(72) Erfinder: GÜNTER, Klaus, 78733 Aichhalden (DE); DECK, Thomas, 77709 Wolfach (DE); FEHRENBACH, Josef, 77716 Haslach (DE)
(74) Vertreter: Kopf, Korbinian Paul
(86) Internationale Anmeldenummer: PCT/EP2006/009659
(87) Internationale Veröffentlichungsnummer: WO 2007/039307

(56) Entgegenhaltungen:
- DE-A1- 4 017 934
- DE-A1- 10 258 075
- DE-C1- 19 719 730
- DE-U1-202004 000 928
- US-A- 4 905 205
- US-A1- 2002 120 422

## Beschreibung

Die Erfindung betrifft das allgemeine technische Gebiet der Messgeräte. Insbesondere betrifft die vorliegende Erfindung eine Schaltungsanordnung zum Übertragen von Daten zwischen einem Feldgerät und einem Steuergerät, einen Datenlogger, eine Feldgerät-Anordnung, ein Verfahren zum Übertragen von Daten, eine Schaltungsanordnung zum Speichern von Daten eines Feldgeräts und zum Überspielen der Daten auf ein Steuergerät und Verwendung einer portablen Datenspeichereinrichtung zum Speichern von Daten eines Feldgeräts und zum Überspielen der Daten auf ein Steuergerät.

Die Druckschrift US 2002/0120422 A1 beschreibt ein Überwachungssystem mit einer Sensoreinheit mit Sensoren und einer Leistungsversorgung, sowie einen tragbaren Daten Logger mit einem Kommunikationsmodul und einer Leistungsversorgung.

Die Druckschrift DE 197 19 730 C1 offenbart eine Steckverbindung für einen explosionsgefährdeten Bereich zur Energie- und Datenübertragung mittels elektrischer Größen bei einem Bussystem, welche ein als Übertrager ausgebildetes Primärteil und ein Sekundärteil sowie Begrenzereinrichtungen für die zu übertragende elektrische Größe aufweist

Die Druckschrift DE 20 2004 000 928 U1 betrifft eine Schaltungsanordnung zur Codeumwandlung.

Zur Messung des Füllstands von Flüssigkeiten und Feststoffen in Behältern aus Ausnutzung der Messung von Laufzeit von elektromagnetischen Wellen werden Messvorrichtungen üblicherweise an oder in der Behälterwand montiert. Die Messvorrichtung sendet anschließend Wellen entweder geführt durch einen Wellenleiter oder abgestrahlt über eine Antenne in Richtung des Füllgutes. Die am Füllgut reflektierten Wellen werden anschließend von der Messvorrichtung wieder empfangen. Aus der daraus ermittelbaren Laufzeit ergibt sich der Abstand zwischen Sensor und Füllgut und aus der Kenntnis der Position von Sensor zum Behälterboden die gesuchte Füllhöhe.

Es ist eine Aufgabe der vorliegenden Erfindung, eine zuverlässige Datenübertragungseinrichtung für Messsignale anzugeben.

Diese Aufgabe wird durch eine Schaltungsanordnung nach Anspruch 1, sowie ein Verfahren nach Anspruch 14 gelöst.

Demgemäß wird eine Schaltungsanordnung zum Übertragen von Daten zwischen einem Feldgerät und einem Steuergerät, ein Datenlogger, eine Feldgerät-Anordnung, ein Verfahren zum Übertragen von Daten, eine Schaltungsanordnung zum Speichern von Daten eines Feldgeräts und zum Überspielen der Daten auf ein Steuergerät und Verwendung einer portablen Datenspeichereinrichtung zum Speichern von Daten eines Feldgeräts und zum Überspielen der Daten auf ein Steuergerät gemäß den unabhängigen Patentansprüchen geschaffen.

Gemäß einem exemplarischen Ausführungsbeispiel der vorliegenden Erfindung wird eine Schaltungsanordnung zum Übertragen von Daten zwischen einem Feldgerät und einem Steuergerät angegeben. Die Schaltungsanordnung weist dabei eine erste Datenschnittstelle auf, mit der die Schaltungsanordnung an das Steuergerät gekoppelt werden kann. Mit einer zweiten Datenschnittstelle, kann die Schaltungsanordnung an das Feldgerät gekoppelt werden. Darüber hinaus weist die Schaltungsanordnung zumindest eine Datenspeichereinrichtung auf.

Die erste Datenschnittstelle und die zweite Datenschnittstelle sind kommunizierfähig gekoppelt. An zumindest einer der ersten Datenschnittstelle oder der zweiten Datenschnittstelle ist die Datenspeichereinrichtung angekoppelt. Die Datenspeichereinrichtung ist derart ausgebildet, dass bei Bedarf Daten, die zwischen der ersten Datenschnittstelle und der zweiten Datenschnittstelle ausgetauscht werden, gespeichert bzw. zwischengespeichert oder gepuffert werden können.

Es kann von Interesse sein, dass Messdaten, die zu einem Messzeitpunkt anfallen, nicht sofort an ein Steuergerät oder Auswertegerät weitergeleitet werden. Mögliche Fälle, in denen eine sofortige Weiterleitung von Messwerten ungewünscht ist, können vorliegen, wenn beispielsweise die Auswertung einer Zeitreihe erwünscht ist. Dazu sollen Messwerte gesammelt zur Verfügung gestellt werden.

Eine Schnittstelleneinrichtung, die eine Datenspeichereinrichtung aufweist, kann über einen Zeitraum Messwerte erfassen, ohne mit dem Steuergerät verbunden zu sein. So kann die Aufnahme von Messreihen über einen Zeitraum autark erfolgen. In diesem Zusammenhang bedeutet autark insbesondere, dass es nicht nötig ist, gleichzeitig oder während der Messung ein Steuergerät an das Messgerät angeschlossen zu haben und dass dieses Steuergerät nicht überwacht werden muss. Folglich können Messreihen über Nacht aufgenommen werden. In anderen Worten bedeutet das, dass die Schaltungsanordnung von einer Energieversorgung mittels des Steuergeräts unabhängig ist.

Ein anderes Beispiel für eine nicht unmittelbare Weiterleitung von Messwerten könnte die Aufnahme von so genannten Hüllkurven sein. Handelt es sich bei einem Messgerät beispielsweise um ein Ultraschall- oder ein Radarmessgerät, bei dem ein Echo von einem Füllgut reflektiert wird, so interessiert in vielen Fällen nicht der exakte zeitliche Verlauf der Echowerte, sondern die Tendenz, die in Form einer Hüllkurve, insbesondere einer Echohüllkurve, dargestellt werden kann. Eine Hüllkurve kann beispielsweise Extremwerte einer zeitlichen Oszillation nachzeichnen. So können beispielsweise aus den Echohüllkurven von Radarsensoren örtliche Lagen von Objekten erkannt werden.

Auch bei dem Auftreten eines Datenstaus kann eine Datenspeicherung nützlich sein. Sind in einem Moment für eine Schnittstelle zur Weiterverarbeitung zu viele Daten vorhanden, kann mittels einer Datenspeichereinrichtung eine Zwischenspeicherung, ein Loggen, Protokollieren oder eine Pufferung von Daten erfolgen. Somit kann zusammenfassend gesagt werden, dass mittels einer Datenspeichereinrichtung eine Erhöhung der Datensicherheit, insbesondere der Aufnahme und Auswertung vorhandener Daten, erfolgen kann.

Gemäß einem weiteren exemplarischen Ausführungsbeispiel der vorliegenden Erfindung wird ein Datenlogger mit einer Schaltungsanordnung zum Übertragen von Daten zwischen einem Feldgerät und einem Steuergerät bereitgestellt. Ein Datenlogger kann als autarkes Gerät zur Kopplung eines Steuergeräts und eines Feldgeräts in einem Exbereich und zur Zwischenspeicherung von Daten eingesetzt werden. Der Datenlogger kann autark betrieben werden, da er entweder eine eigene interne Stromversorgung aufweist oder von einem Feldgerät mit Energie versorgt werden kann. Wenn der Datenlogger von dem Feldgerät mit Energiebetrieben wird, ist das Messsystem, das das Feldgerät und den Datenlogger umfasst, als Einheit autark betreibbar.

Gemäß noch einem weiteren exemplarischen Ausführungsbeispiel der vorliegenden Erfindung wird eine Feldgerät-Anordnung mit einer Schaltungsanordnung oder einem Datenlogger und einem Feldgerät geschaffen. Die Schaltungsanordnung bzw. der Datenlogger weisen die oben beschriebenen Merkmale auf.

Gemäß noch einem anderen exemplarischen Ausführungsbeispiel der Erfindung ist ein Verfahren zum insbesondere seriellen Übertragen von Daten geschaffen, wobei Daten zwischen der ersten Datenschnittstelle und der zweiten Datenschnittstelle werden und bei Bedarf eine Speicherung der zu übertragenden Daten stattfindet.

Es kann eine Schaltungsanordnung zum Speichern von Daten eines Feldgeräts und zum Überspielen der Daten auf ein Steuergerät bereitgestellt werden. Die Schaltungsanordnung weist eine Daten-Schnittstelle auf, die sowohl zum Koppeln an ein Feldgerät als auch an ein Steuergerät eingerichtet ist. Die Daten-Schnittstelle weist eine Datenspeichereinrichtung auf, die derart eingerichtet ist, bei Bedarf Daten von der Daten-Schnittstelle aufzunehmen und bei Bedarf die Daten wieder an der Daten-Schnittstelle bereitzustellen.

Dabei kann die Datenspeichereinrichtung eingerichtet sein, zu erkennen, dass die Schaltungsanordnung an ein Feldgerät, insbesondere an eine Schnittstelle des Feldgeräts gekoppelt worden ist. Durch die Kopplung kann der Datenspeicher angestoßen werden, automatisch vorhandene Daten von dem Feldgerät einzusammeln und in der Datenspeichereinrichtung zu speichern.

Die Schaltungsanordnung kann portabel ausgebildet sein, so dass sie leicht an das Feldgerät ankoppelbar ist.

Mittels der gleichen Daten-Schnittstelle, mit der sie an das Feldgerät ankoppelbar ist, kann die Schaltungsanordnung auch an ein Steuergerät anschließbar ausgebildet sein. Bei dem Anschließen an das Steuergerät kann der Datenspeicher erkennen, dass Daten in der Datenspeichereinrichtung vorhanden sind und dass das Steuergerät ausgebildet ist, die Daten empfangen zu können. Dadurch kann der Datenspeicher veranlasst werden, die Daten an das Steuergerät zu übertragen. Somit kann eine portable Speichereinrichtung für das Feldgerät geschaffen werden.

An dem Feldgerät kann auf ein drahtgebundenes Bussystem zum Übertragen von Daten auf ein Steuergerät verzichtet werden. Die Datenübertragung und auch die Übertragung von Parametern oder Steuerbefehlen für das Feldgerät kann mittels der portablen Seichereinrichtung erfolgen.

Es kann eine Verwendung einer portablen Datenspeichereinrichtung zum Speichern von Daten eines Feldgeräts und zum Überspielen der Daten auf ein Steuergerät angegeben werden. Beispielsweise kann eine Datenübertragung zwischen einem Feldgerät und einer Steuereinrichtung mit einem Memorystick erfolgen.

Exemplarische Ausführungsbeispiele der vorliegenden Erfindung ergeben sich aus den abhängigen Patentansprüchen.

Gemäß einem weiteren exemplarischen Ausführungsbeispiel der vorliegenden Erfindung weist die Schaltungsanordnung ein galvanisches Trennelement auf. Das galvanische Trennelement ist zwischen der ersten Daten-Schnittstelle und der zweiten Daten-Schnittstelle kommunizierfähig angekoppelt.

Die Datenspeichereinrichtung kann in einer Flussrichtung der Daten vor oder hinter der galvanischen Trennung liegen. Eine Datenspeichereinrichtung vor einer galvanischen Trennung kann beispielsweise durch ihre Pufferwirkung den Engpass der galvanischen Trennung entzerren.

Bei Arbeiten in einer so genannten Exumgebung kann es gefordert sein, dass gewisse Voraussetzungen an elektrische Geräte gestellt werden, um diese Geräte in der Exumgebung zu betreiben. Eine Exumgebung kann in mehrere Schutzklassen aufgeteilt sein. Exbereiche können Bereiche sein, in denen explosionsgefährdete Materialien oder Prozessgrößen eingesetzt werden. Wenn ein in einem Exbereich eingesetztes Messgerät einen Funkenüberschlag erzeugt, kann dieser Funkenschlag, wegen der Nähe zu dem explosionsgefährdeten Material, zu einer ungewollten Entzündung des Materials führen, wodurch eine Explosion ausgelöst werden kann.

Zu einem Einsatz eines Messgerätes in einem explosionsgefährdeten Bereich kann es kommen, wenn beispielsweise ein Füllstandsmessgerät für die Messung von Füllständen in einem Öltank eingesetzt wird. Es kann aufgrund der Größe des Öltanks vorkommen, dass das Gehäuse des Öltanks ein Potential aufweist, das sich von dem Potential eines Steuergerätes unterscheidet. Ein Steuergerät kann für die Bedienung des Messgerätes oder Feldgerätes benötigt werden.

Da ein Bussystem ein elektrisch leitfähiges System sein kann, kann durch die Verbindung eines Steuergerätes und eines Messgerätes an dem Öltank, zwischen dem Öltank und damit auch dem Messgerät und dem Steuergerät ein elektrischer Ladungsausgleich stattfinden. Mittels einer galvanischen Trennung des elektrisch leitenden Systems kann ein Ausgleich der Potentialunterschiede unterbunden werden. In anderen Worten bedeutet das, dass die galvanische Trennung des Messgerätes und des Steuergerätes verhindern kann, dass ein niederfrequenter Strom, insbesondere ein Gleichstrom, zwischen dem Messgerät und dem Steuergerät fließen kann.

Gemäß der vorliegenden Erfindung weist die Schaltungsanordnung zumindest einen ersten und zumindest einen zweiten Parallel-/Seriellwandler auf. Der erste Parallel-/Seriellwandler ist mit der ersten Datenschnittstelle und der zweite Parallel-/Seriellwandler ist mit der zweiten Datenschnittstelle gekoppelt. Der erste und der zweite Parallel-/Seriellwandler sind ausgebildet untereinander Daten seriell zu übertragen

Mittels Parallel-/Seriellwandler kann es ermöglicht werden, ein als ein paralleles digitales Signal vorliegendes Signal einer gewissen Bitbreite über eine einzige serielle Leitung zu übertragen. Dadurch kann beispielsweise die Anzahl von benötigten Verbindungen zwischen zwei Datenschnittstellen reduziert werden. Somit lassen sich beispielsweise Auswirkungen durch Gegensprecheffekte von parallelen Leitungen untereinander vermeiden.

Durch die Reduzierung der benötigten Verbindungen zwischen den Schnittstellen kann auch die Anzahl Verbindungsleitungen zwischen beispielsweise zwei gekoppelten Baugruppen verringert werden. So kann auch die Anzahl möglicherweise benötigter galvanischer Trennelemente reduziert werden, denn zur Vermeidung von Ausgleichsströmen könnte jede elektrische Verbindung zwischen Schnittstellen, in denen unterschiedliche Potentiale auftreten können, mittels eines galvanischen Trennelements abgetrennt sein. Daher kann mittels der Serialisierung von parallelen Daten, die Anzahl der benötigten galvanischen Elemente reduziert werden.

Der erste Parallel-/Seriellwandler und der zweite Parallel-/Seriellwandler sind auch derart kommunizierfähig gekoppelt , dass der erste Parallel-/Seriellwandler zwischen der ersten Daten-Schnittstelle und einem galvanischen Element angeordnet ist und der zweite Parallel-/Seriellwandler zwischen der zweiten Datenschnittstelle und dem galvanischen Element angeordnet ist. Dabei übertragen der erste Parallel-Seriell Wandler und der zweite Parallel-Seriell Wandler untereinander die Daten seriell.

Gemäß einem anderen exemplarischen Ausführungsbeispiel sind der erste Parallel-/Seriellwandler oder der zweite Parallel-/Seriellwandler oder der erste Parallel-/Seriellwandler und der zweite Parallel-/Seriellwandler als LVDS-Bauteil ausgebildet. Die LVDS (Low Voltage Differential Signaling)-Technologie erlaubt es, parallel vorliegende Daten seriell zu übertragen. LVDS ist ein Schnittstellenstandard für die Datenübertragung. Dabei kommt eine niedrige Spannung zum Einsatz, das bedeutet, anstatt der üblichen hohen Spannung von 5 V (TTL) oder 3 V für digitale Systeme wird eine niedrigere Spannung verwendet.

Es ist folglich nicht eine relativ hohe Spannungsdifferenz von beispielsweise 3 V nötig, um eine Null von einer Eins zu unterscheiden, wodurch es vermieden werden kann, eine entsprechend hohe Leistung zu verbrauchen. Typischerweise arbeitet die LVDS-Technologie mit 0,4 V und einer Leitungsimpedanz von 100 Ohm. Dadurch kann die mit jeder Signalflanke zu ändernde Ladung des Kabels geringer sein und es können schnellere Signalflanken realisiert werden.

LVDS basiert auf einer differentiellen Signalübertragung, d. h. einem engliegenden Zweidrahtsystem, dessen Signale um 180° phasenverschoben sind. Dies ermöglicht es, Störungen leicht und effizient zu filtern, da eine Störung bei beiden Leitungen an der gleichen Stelle in der gleichen Intensität auftritt. Eine typische Datenrate, die mit LVDS-Technologie erreicht werden kann, liegt bei einer Leitungslänge von 2 m bei einer Datenrate von 200 Megabit pro Sekunde. Ein weiterer möglicher Bereich, in dem mittels LVDS-Technologie erzielbare Datenraten liegen können, ist der Bereich von 520 Megabit pro Sekunde bis 600 Megabit pro Sekunde oder 600 Megabit pro Sekunde bis 1,5 Gigabit pro Sekunde.

Gemäß einem weiteren exemplarischen Ausführungsbeispiel der vorliegenden Erfindung weist die Schaltungsanordnung einen ersten Schnittstellentreiber auf. Der erste Schnittstellentreiber kann ausgebildet sein, eine Anpassung der niedrigen LVDS-Logikpegel an ein für die Schnittstelle vorgesehenen Spannungs-, Energieoder Leistungspegel anzupassen. So kann beispielsweise die erste Datenschnittstelle als USB (Universal Serial Bus)-Schnittstelle für ein Steuergerät ausgebildet sein, dessen Pegel bei ca. +5 V liegt. Ein erster Schnittstellentreiber würde eine entsprechende Spannungsanpassung vornehmen.

Ein Schnittstellentreiber kann die vorliegenden Nutzsignale an die von einem entsprechenden Schnittstellenstandard geforderten Pegel und ein dem Standard entsprechendes Zeitverhalten der Signale anpassen.
Gemäß einem noch anderen Ausführungsbeispiel der vorliegenden Erfindung weist die Schaltungsanordnung an ihrer zweiten Datenschnittstelle einen zweiten Schnittstellentreiber auf. Der zweite Schnittstellentreiber kann ausgebildet sein, um beispielsweise an der zweiten Datenschnittstelle einen Leistungspegel für eine feldgerät-spezifische Schnittstelle zur Verfügung zu stellen. Sollte es sich bei einem Feldgerät, das an der Schaltungsanordnung angeschlossen werden soll, um ein Feldgerät mit einem HART®-Bus handeln, liegen die geforderten Spannungspegel bei HART^{®}-Bus typischen Spannungspegeln im Bereich von 270 mV bis 700 mV.

Mittels unterschiedlicher Schnittstellentreiber an dem Steuergerät-Interface und an dem Messgerät-Interface lassen sich für das Steuergerät und das Messgerät unterschiedliche Spannungspegel realisieren.

Insbesondere kann der Datenlogger als Schnittstellenkonverter eingerichtet sein, d. h. als Vorrichtung, welche ein unterschiedliches Schnittstellenformat zwischen der Schnittstelle zum Anschließen des Steuergeräts und der Schnittstelle zum Anschließen des Feldgeräts ermöglicht. Auf diese Art und Weise können auch zwei auf völlig unterschiedlichen Standards basierende Geräte miteinander kommunizieren, wenn ein erfindungsgemäBer Datenlogger als "Übersetzer" dazwischengeschaltet ist. Ein modularer Aufbau, bei dem die Schnittstellentreiber austauschbar oder aufsteckbar sind, ist möglich.

Gemäß einem weiteren exemplarischen Ausführungsbeispiel der vorliegenden Erfindung kann die erste Datensphnittstelle eine USB-, RS.232-Schnittstelle oder eine andere bei einem Gerät der Datenverarbeitung übliche Schnittstelle sein. Ein Steuergerät kann üblicherweise ein PC oder ein PDA sein. Durch die Bereitstellung einer entsprechenden Schnittstelle kann eine Bedienung der Schaltungsanordnung mit dem Steuergerät ermöglicht werden.

Gemäß noch einem anderen exemplarischen Ausführungsbeispiel der vorliegenden Erfindung kann die zweite Datenschnittstelle eine HART®-Bus-, VBUS-, Feld-Bus- oder I²C-Busschnittstelle sein. Die zweite Datenschnittstelle kann an eine Schnittstelle eines Messgerätes angepasst sein. Folglich ist der Anschluss eines Messgerätes an der zweiten Datenschnittstelle möglich, wodurch der Empfang von einem Messgerät bereitgestellten Daten ermöglicht werden kann.

Gemäß noch einem weiteren Ausführungsbeispiel der vorliegenden Erfindung weist die Schaltungsanordnung ein weiteres galvanische Trennelement auf. Dabei ist das weitere galvanische Trennelement ausgebildet, eine Energiezufuhr zu der Schaltungsanordnung galvanisch zu trennen.

Die Energiezufuhr kann zwei getrennte Schaltungsteile mit einer Energie versorgen, ohne dass es über die Energieversorgung zu einem Gleichstromfluss zwischen den Schaltungsteilen kommen kann.

Gemäß einem weiteren exemplarischen Ausführungsbeispiel der vorliegenden Erfindung ist die Datenspeichereinrichtung als Flash NAND ausgebildet. Ein Flash NAND kann ein Speicherbaustein sein, der einen hohen Datendurchsatz erlauben kann. Somit kann ein sehr schnelles Schreiben und Lesen von Daten stattfinden. Durch die schnelle Zugriffsgeschwindigkeit kann die Verarbeitungsgeschwindigkeit der Schaltungsanordnung insgesamt erhöht werden. Durch diese Geschwindigkeitssteigerung kann die Gesamtperformance der Schaltungsanordnung erhöht werden. Die Datenspeichereinrichtung kann mittels eines NAND Flash Speichers an die hohe Übertragungsrate der seriellen Datenverbindung angepasst sein. In anderen Worten bedeutet das, dass die Verarbeitungsgeschwindigkeit der Datenspeichereinrichtung an die Übertragungsrate der seriellen Verbindung angepasst ist.

Gemäß noch einem weiteren exemplarischen Ausführungsbeispiel der vorliegenden Erfindung weist das galvanische Trennelement zumindest einen Kondensator auf. Bei einem Kondensator kann es sich um zwei von einem dielektrischen Material getrennte Leiterplatten handeln. Die Trennung mittels dielektrischem Material kann einen Funkenüberschlag und einen Fluss von Gleichstrom zwischen den Kondensatorplatten verhindern. Mittels eines Kondensators als galvanischem Trennelement können die Anforderungen des Exschutzes an die Schaltungsanordnung erfüllt werden. Physikalisch gesehen werden mittels des dielektrischen Materials zwei nicht leitfähig verbundene Stromkreise geschaffen.

Möglich sind auch Kondensatorbänke, Parallel- und/oder Serienverkettungen von Kondensatoren.

Ein Kondensator in einer Leitung kann einen Ladungsaustausch zwischen den an der Leitung angeschlossenen Elementen verhindern. Dadurch kann ein Kondensator zwischen der ersten Daten-Schnittstelle und der zweiten Daten-Schnittstelle einen Stromfluss zwischen den beiden Schnittstellen verhindern. LVDS Verbindungen können differentiell aufgebaut sein. Somit kann jede Verbindung eine Vielzahl von Leitungen aufweisen. Jede dieser Vielzahl von Leitungen kann ein galvanisches Trennelement in der Form eines Kondensators aufweisen.

Viele Fortbildungen der Erfindung wurden bezugnehmend auf die Schaltungsanordnung, den Datenlogger und die Feldgerät-Anordnung beschrieben.

Diese Ausgestaltungen gelten auch für das Verfahren zum seriellen Übertragen von Daten.

I2C oder I²C (für Inter-Integrated Circuit) ist ein serieller Bus für Computersysteme. Er kann benutzt werden, um Geräte mit geringer Übertragungsgeschwindigkeit an ein Embedded System oder eine Hauptplatine anzuschließen.

Das HART®-Protokoll (Highway Addressable Remote Transmitter) kann insbesondere als ein offenes Master-Slave-Protokoll für busadressierbare Feldgeräte bezeichnet werden. Es kann eine Methode implementieren, Daten mittels Frequency Shift Keying (FSK), aufgesetzt auf dem 4 bis 20 mA-Prozesssignal, zu übertragen, um Fernkonfiguration und Diagnoseüberprüfung zu ermöglichen.

Sowohl I2C als auch HART® eignen sich als Protokoll zur Kommunikation mit einem Feldgerät, z. B. mit einem Flüssigkeitsmessgerät oder mit einem Druckmessgerät.

Im Folgenden werden exemplarische Ausführungsbeispiele der vorliegenden Erfindung mit Verweis auf die Figuren beschrieben.
Fig. 1 zeigt ein Blockschaltbild einer Schaltungsanordnung zur Übertragung von Daten zwischen Feldgerät und Steuergerät gemäß einem exemplarischen Ausführungsbeispiel der Erfindung.
Fig. 2 zeigt eine Feldgerät-Anordnung gemäß einem exemplarischen Ausführungsbeispiel der Erfindung.
Fig. 3 zeigt eine Feldgerät-Anordnung gemäß einem exemplarischen Ausführungsbeispiel der Erfindung.
Fig. 4 zeigt eine Feldgerät-Anordnung gemäß einem exemplarischen Ausführungsbeispiel der Erfindung.
Fig. 5 zeigt einen Schaltplan eines Datenloggers gemäß einem exemplarischen Ausführungsbeispiel der Erfindung.

Gleiche oder ähnliche Komponenten in unterschiedlichen Figuren sind mit gleichen Bezugsziffern versehen.

Die Darstellungen in den Figuren sind schematisch und nicht maßstäblich.

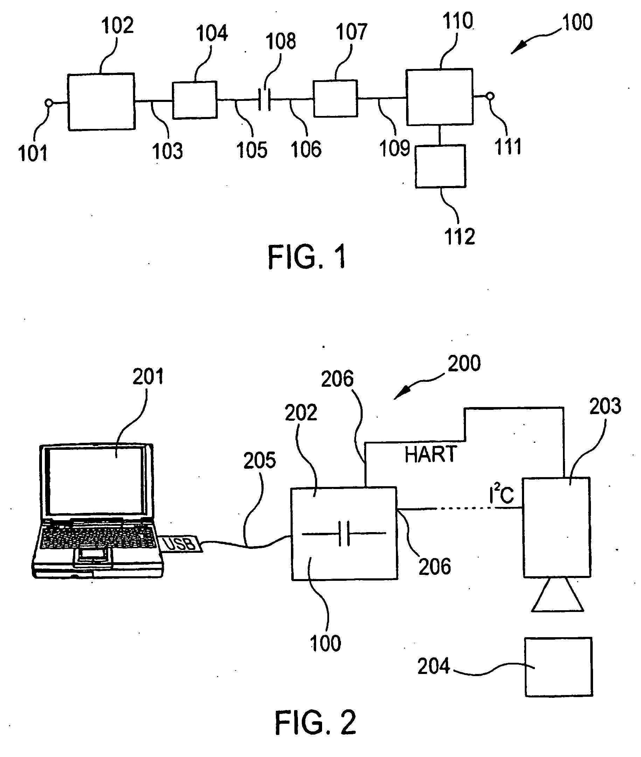

Fig. 1 zeigt ein Blockschaltbild einer Schaltungsanordnung 100 zur Übertragung von Daten zwischen einem Feldgerät und einem Steuergerät (beide sind in Fig. 1 nicht gezeigt). An dem ersten Interface 101 kann ein Steuergerät angeschlossen werden. Die für den Betrieb benötigten Signalpegel, insbesondere die für den Betrieb benötigte Energie wird dem Interface bzw. dem daran angeschlossenen Steuergerät über den ersten Interfacetreiber 102 entnommen. Der erste Interfacetreiber 101 kann beispielsweise als USB Anschluss ausgebildet sein und über eine dafür in dem USB Anschluss vorgesehene Leitung Energie beziehen.

Alternativ und ergänzend zu einer Energieversorgung ist der Interfacetreiber 102 auch für die Weiterleitung empfangener Daten verantwortlich. Die Daten empfängt bzw. sendet der erste Interfacetreiber 102 über die parallelen Leitungen 103. Im vorliegenden Fall beträgt die Breite der parallelen Zuleitung 103 acht Bit. Diese Datenübertragung erfolgt in Hin- und Rückrichtung getrennt. Für jede Richtung wird eine acht Bit breite Datenleitung verwendet.

Der erste Parallel-/Seriellwandler 104 ist für die Umwandlung von parallelen Daten, die über die Leitung 103 empfangen bzw. gesendet werden, in serielle Daten, die über die Leitung 105 ausgesandt bzw. empfangen werden, zuständig. Der erste Parallel-/Seriellwandler 104 erzeugt auf Leitung 105 die sog. LVDS-Signale. Zur Weiterleitung auf den benachbarten Parallel-/Seriellwandler 107 muss das Signal das galvanische Trennelement 108 überbrücken und über die serielle LVDS-Leitung 106 den zweiten Parallel-/Seriellwandler 107 erreichen. Die galvanische Trennung 108 setzt einem Gleichstromsignal bzw. einem Gleichtaktsignal einen nahezu unendlich hohen Widerstand entgegen, so dass sich dieses Gleichtaktsignal nicht über die galvanische Trennung 106 hinweg ausbreiten kann. Die Ausbreitung über das galvanische Trennelement 108 kann sowohl in der Richtung von dem ersten Parallel-/Seriellwandler 104 zu dem zweiten Parallel-/Seriellwandler 107 als auch in die umgekehrte Richtung stattfinden.

Der zweite Parallel-/Seriellwandler 107 kann ein Signal, das seriell auf der Leitung 106 empfangen wurde, in parallele Datenströme zurückwandeln. Die parallelen Datenströme werden auf der Leitung 109 dem zweiten Interfacetreiber 110 zur Verfügung gestellt. Der zweite Interfacetreiber 110 kann hierbei eine physikalische Anpassung der parallelen Daten an das entsprechende Messinterface 111 vornehmen. Die Anpassung erfolgt diesbezüglich insbesondere im Hinblick auf Signalpegel und Timingverhalten. Ein I²C-Interface als Messinterface 111 unterscheidet sich von einem HART®-Busprotokoll, so dass nur angepasste Interface 111 zur Kommunikation mit einem entsprechenden Gerät eingesetzt werden können. Der Typ der Schnittstelle 111 kann auch über eine Umschaltung eingestellt werden.

Dabei kann das zu bedienende Interface über die Schaltungsanordnung ausgewählt werden.

Alternativ oder ergänzend zu der Energieversorgung über das erste Interface 101 und den ersten Interfacetreiber 102 kann eine Energieversorgung der Schaltung 100 über das zweite Interface 111 und den zweiten Interfacetreiber 110 erfolgen. Somit ist eine Energieversorgung der Schaltung von einem Feldgerät aus, das am zweiten Interface 111 angeschlossen ist, möglich.

Eine Umschaltung zur Bestimmung ob eine Energieversorgung der Schaltungsanordnung 100 über das erste Interface 101 oder über das zweite Interface 111 erfolgen soll kann automatisch erfolgen, indem die Schaltung 100 beispielsweise erkennt, an welchem Interface überhaupt eine Energieversorgung angeschlossen ist.

In Fig. 1 ist an dem zweiten Interfacetreiber 110 ebenfalls der Datenspeicher 112 angeschlossen. Er liegt für Daten, die von dem Messgerät an dem Anschluss 111 zu der Steuereinrichtung an dem Anschluss 101 übertragen werden, vor dem galvanischen Trennelement 108. Es kann sich dabei um einen integrierten aber auch um einen externen Datenspeicher 112 handeln. In Fig. 1 ist ein externer Datenspeicher 112 gezeichnet. Der Datenspeicher 112 kann eingesetzt werden, um Daten, die über das zweite Interface 111 schneller geliefert werden als sie von dem Parallel-/Seriellwandler 107 weiterverarbeitet werden können, zwischenzuspeichern oder zu puffern.

Die Schaltungsanordnung 100 kann für den Datenaustausch zwischen einem Messgerät und einem Steuergerät verwendet werden.

Fig. 2 zeigt eine Feldgerät-Anordnung gemäß einem exemplarischen Ausführungsbeispiel der vorliegenden Erfindung. Die Feldgerät-Anordnung 200 enthält einen Steuer-PC 201, einen Datenlogger 202 und ein Füllstandsmessgerät 203 zum Messen des Füllstands in einem angeschlossenen Tank 204.

Der Datenlogger 202 weist eine Schaltungsanordnung 100 zum Übertragen von Daten auf. Der Datenlogger 202 enthält eine erste Datenschnittstelle 205, welche ein ŮSB-Anschluss 205 ist, so dass der PC 201 und der Datenlogger 202 über den USB-Bus 205 gekoppelt sind.

Ferner enthält der Schnittstellenkonverter 202 zweite Datenschnittstellen 206, mittels welchen der Datenlogger 202 mit dem Füllstandsmessgerät 203 gekoppelt werden kann, und zwar selektiv gemäß dem I²C-Standard oder dem HART®-Standard. In der in Fig. 2 gezeigten Konfiguration sind der Datenlogger 202 und das Füllstandsmessgerät 203 gemäß dem HART®-Standard gekoppelt.

Der Datenlogger 202 kann sowohl über den USB Anschluss 205 als auch über den Messanschluss 206 mit Energie versorgt werden. Die Energiequelle kann dabei von dem Datenlogger gewählt werden. Eine Umschaltung kann automatisch erfolgen.

Ferner realisiert der Datenlogger 202 eine galvanische Trennung zwischen dem Steuer-PC 201 und dem Füllstandmessgerät 203, welches in einer explosionsgefährdeten Umgebung angeordnet sein kann. Durch die galvanische Trennung werden die Schaltkreise 206 und 205 physikalisch entkoppelt.

Der Datenlogger 202 kann Daten, die zwischen PC 201 und Füllstandmessgerät 203 ausgetauscht werden, in einem internen Speicher des Datenloggers 202 (nicht gezeichnet in Fig. 2) aufzeichnen oder loggen. Somit werden mittels des Datenlogger 202 Daten, beispielsweise Messwerte mit Zeitstempel oder Echokurven, von dem Feldgerät oder Sensor 203 aufgezeichnet.

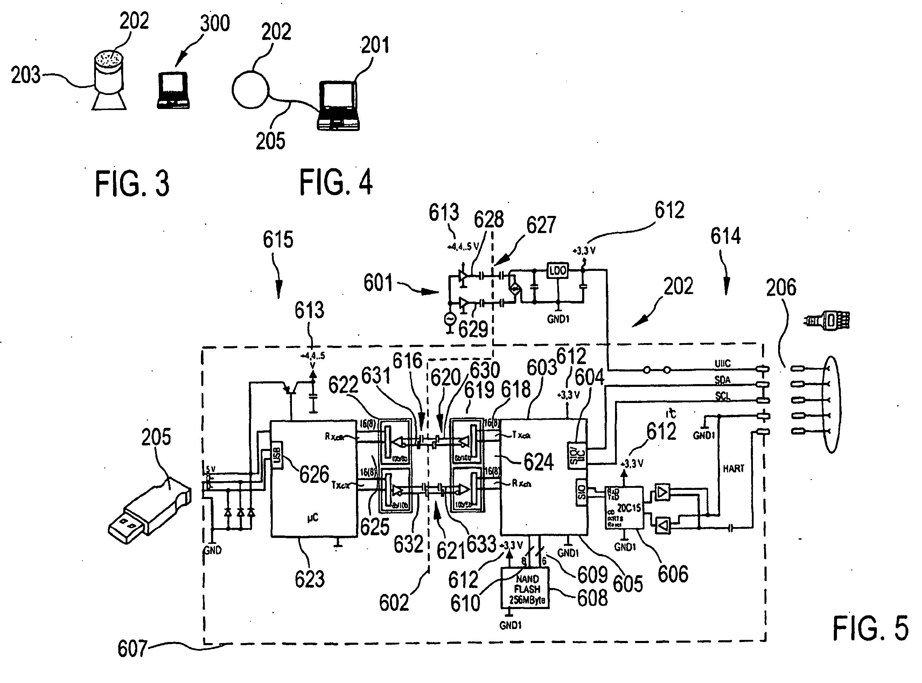

In Fig. 3 ist nochmals eine Feldgerät-Anordnung gezeigt, die mit einem Programmiergerät 300 zur Einstellung der Datenaufzeichnung gekoppelt werden kann. Ferner ist auch der hier auf das Füllstandmessgerät 203 aufgesetzte Datenlogger 202 aus Fig. 2 gezeigt. Der Datenlogger 202 weist eine Form und eine Anschlussvorrichtung auf, die für den Anschluss an das Feldgerät 203 angepasst ist. In Fig. 3 sind das Programmiergerät 300 und der Datenlogger 202 nicht gekoppelt.

Der Datenlogger 202 kann autark, d. h. ohne mit dem USB-Anschluss 205 des Steuergeräts 300 verbunden zu sein, Daten, die er von dem Messgerät 203 erhält, speichern. Die gespeicherten Daten können dann zu einem späteren Zeitpunkt von dem PC 201 aus dem Datenlogger 202 ausgelesen werden. Dazu muss der Datenlogger 202 nicht mit dem Feldgerät verbunden werden. Während der Aufzeichnung kann der Datenlogger seine Energie von einer eigenen Energieversorgung, beispielsweise einem Netzteil oder einer Solarzelle (nicht gezeichnet in Fig. 3), oder aber auch über das Feldgerät beziehen.

In Fig. 4 ist eine weitere Feldgerät-Anordnung gezeigt, in welcher ein Steuer-PC 201 mit dem Datenlogger 202 über einen USB-Bus 205 gekoppelt ist. Auf diese Art und Weise kann ein Auslesen von Daten erfolgen. Ebenfalls können Daten, die während eines autarken Betriebs des Datenloggers 202 gesammelt wurden, weiterverarbeitet werden. In Fig. 4 ist der Datenlogger 202 nicht mit einem Feldgerät verbunden. Die Daten sind folglich in dem Datenlogger 202 gespeichert und können ohne einer weiteren Verbindung zum Feldgerät ausgelesen werden.

Fig. 5 zeigt eine Vielzahl von Komponenten, wobei im Folgenden vorwiegend auf die Schaltungsanordnung 607 Bezug genommen werden soll. Die Schaltungsanordnung 607 zeigt eine Anordnung zum Übertragen von Daten zwischen einem Feldgerät und einem Steuergerät. In der dargestellten Schaltungsanordnung 607 findet eine Datenübertragung zwischen dem USB-Anschluss 205 und dem Messgeräteanschluss 206 bidirektional statt. Der Messgeräteanschluss 206 kann wahlweise zwischen einem I²C-Busanschluss 206 und einem HART®-Anschluss 206 umgeschalten werden. In anderen Worten ausgedrückt weist der Anschluss 206 immer die gleichen physikalischen Pins auf. Der Inhalt der Signale auf den einzelnen Leitungen bzw. Pins des Anschluss 206 kann entsprechend den unterschiedlichen Bus-Standards unterschieden werden.

Die Signale für den I²C-Bus werden über den Ausgang 604 des Mikrocontrollers 603 bereitgestellt. Ferner werden die Signale des HART®-Busses über den Ausgang 605 des Mikrocontrollers 603 und dem HART®-Interfacetreiber 606 an dem Anschluss 206 bereitgestellt. Über den Messgeräteanschluss 206 können sowohl Signale zu einem Messgerät, d. h. aus der Schaltungsanordnung 607 heraus, als auch von dem Messgerät, also in die Schaltungsanordnung 607 hinein, übertragen werden.

Der Mikrocontroller 603 ist mit einem Datenspeicher 608, der im vorliegenden Fall ein Flash NAND mit 256 Megabyte Kapazität ist, verbunden. Der Anschluss des Datenspeicher 608 erfolgt über eine sechsadrige Leitung 609 und eine achtadrige Leitung 610. Der Flashspeicher 608 ist über die Energieversorgungsleitung 612 mit der Energieversorgung 601 verbunden. Die Energieversorgung 601 weist das messgerätseitige Potential 612 und das steuergerätseitige Potential 613 auf, wobei das steuergeräteseitige Potential 613 das feldgerätseitige Potential 612 übersteigt. Z.B. kann das steuergerätseitige Potential im Bereich von +4,4 V bis +5 V, das feldgerätseitige Potential im Bereich von +3 V bis +3,3 V liegen.

Eine Trennung zwischen den beiden Potentialen 612 und 613 ist in Fig. 5 durch die virtuelle Trennlinie 602 angedeutet. Die galvanische Trennung der Potentiale 612 und 613 ist mittels des galvanischem Trennelements 627 in der Energieversorgung 601 realisiert. Das galvanische Trennelement 627 umfasst vier Kondensatoren, wobei je zwei Kondensatoren in den Versorgungsleitungen 628 und 629 angeordnet sind.

Die Trennlinie 602 deutet die galvanische Trennung zwischen dem messgerätseitigen Teil 614 der Schaltungsanordnung 607 und dem steuergerätseitigen Teil 615 der Schaltungsanordnung 607 an. Mittels dem galvanischen Trennelemente 616 erfolgt die galvanische Trennung zwischen dem feldgerätseitigen Teil 614 der Schaltungsanordnung 607 und dem steuergerätseitigen Teil 615 der Schaltungsanordnung 607 bezüglich der Signalleitungen 620 und 621.

Mittels der galvanischen Trennelemente 627 und 616 erfolgt somit eine vollständige galvanische Trennung der Steuergeräteseite 615 der Schaltungsanordnung 607 und der Messgeräteseite 614 der Schaltungsanordnung 607. Folglich sind sowohl die Energieversorgung als auch die Datenverbindung zwischen der Steuergeräteseite 615 und der Feldgeräteseite 614 getrennt. Die Energie kann dabei beispielsweise über die USB-Schnittstelle 205 bezogen werden.

In Fig. 5 ist das galvanischen Trennelemente 616 durch vier Kondensatoren dargestellt, die verhindern, dass ein Ausgleichsstrom zwischen den beiden Schaltungsteilen 614, 615 aufgrund der unterschiedlichen Potentiale 612, 613 fließen kann. Dieser Ausgleichsstrom könnte nicht nur aufgrund der unterschiedlichen Potentiale 613 und 612 entstehen, sondern könnte auch durch eine Aufladung auf der Feldgerätseite hervorgerufen werden. Ein Wechselstrom kann hingegen die galvanische Trennung 616 überwinden und da die Information in Signalen meist wechselförmig ist, kann eine Übertragung von Signalen über das galvanische Trennelement 616 stattfinden.

Ein möglicher Ausgleichsstrom könnte einen Funkenübersprung bewirken, der zu einer Explosion führen könnte, falls die Schaltungsanordnung 607 in einem Exbereich verwendet werden würde. Um die Anzahl der galvanischen Trennelemente 616 zwischen den beiden Schaltungsteilen gering zu halten, werden die an dem Ausgang 618 des IC des Mikrocontroller 603 als parallele Signale zur Verfügung stehenden Daten mittels Seriell-/Parallelwandler 619 in einen seriellen, d. h. hintereinander liegenden, Datenstrom gewandelt. Es findet die Wandlung von einem 16 Bit breiten parallelen Signal auf eine serielle Hinleitung 620 statt. In Gegenrichtung erfolgt die Übertragung auf der seriellen Leitung 621 analog zu dem oben beschriebenen Wandelverfahren. Die Richtung in die die Datenübertragung erfolgt kann mittels eines Umschalters (nicht in Fig. 5 dargestellt) bestimmt werden. Zu der Richtungsumschaltung kann ein Mikrokontroller eingesetzt werden.

Der serielle Datenstrom der Leitung 620 erreicht den Seriell-/Parallelwandler 622, in welchem das serielle Signal wieder in das 16 Bit breite Datensignal zurückgewandelt wird, das dem Mirkocontroller bzw. der Treiberstufe 623 zur Verfügung gestellt wird. Parallel zu den Daten, die auf den Leitungen 618 übertragen werden, findet über die Leitung 624 bzw. 625 die Übertragung des Taktsignals statt. Ähnlich findet die Übertragung in der Gegenrichtung statt.

Die als parallele Leitungen angedeuteten seriellen Leitungen 620 und 621 sind für die Übertragung von differentiellen Signalen ausgestaltet. Die Richtung der Signalübertragung erfolgt auf den beiden Leitungen 620 und 621 in entgegengesetzter Richtung. Dazu weist die Leitung 620 bzw. 621 jeweils eng, parallel aneinander liegende Strecken 630, 631 und 632, 633 auf, auf denen differentielle Signale übertragen werden. Jede der Strecken 630, 631 und 632, 633 weist zwei Kondensatoren zur physikalischen Trennung auf.

Die Pegel der Signale auf den Leitungen 630 und 631 sind gegenseitig invertiert. Ebenso sind die Pegel der Leitungen 632 und 633 gegenseitig invertiert. Zur Synchronisierung der über die Leitungen übertragenen Signale kann ein Takt Signal eingesetzt werden.

Der Treiber 623 stellt die empfangenen parallelen Daten an dem Ausgang 626 in der dem USB-Standard entsprechenden Form zur Verfügung. Die Signale des Ausgangs 626 der Treiberstufe 623 werden dem Interface 205 zusammen mit der Steuergerätespannung 613 zur Verfügung gestellt.

Auch in der Energieversorgung 601 findet eine galvanische Trennung statt. Somit ist der Datenlogger 202 komplett galvanisch getrennt. D. h. sowohl die Energieversorgung als auch die Datenverbindung ist zwischen Steuergeräteseite 615 und Feldgerätseite 614 getrennt. Die Energie kann beispielsweise über die USB-Schnittstelle 205 bezogen werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Schaltungsanordnung zum Übertragen von Daten zwischen einem Feldgerät und einem Steuergerät, aufweisend:
eine erste Daten-Schnittstelle (101, 205), zum Koppeln an das Steuergerät (201);
eine zweite Daten-Schnittstelle (111, 206), zum Koppeln an das Feldgerät (203);
zumindest eine Datenspeichereinrichtung (112);
wobei zumindest eine Daten-Schnittstelle (101, 111) aus der Gruppe der ersten Daten-Schnittstelle (101, 205) und der zweiten Daten-Schnittstelle (111, 206) an die zumindest eine Datenspeichereinrichtung (112) angeschlossen ist;
wobei die zumindest eine Datenspeichereinrichtung (112) ausgebildet ist, bei Bedarf Daten von zumindest einer Daten-Schnittstelle aus der Gruppe bestehend aus der ersten Daten-Schnittstelle (101, 205) und der zweiten Daten-Schnittstelle (111, 206) aufzunehmen;
dadurch characterisiert, dass die Schaltungsanordnung weiter aufweistzumindest einen ersten Parallel-/Seriellwandler (104, 622); zumindest einen zweiten Parallel-/Seriellwandler (107, 619);
wobei der zumindest eine erste Parallel-/Seriellwandler (104, 622) mit der ersten Daten-Schnittstelle (101, 205) gekoppelt ist; und
wobei der zumindest eine zweite Parallel-/Seriellwandler (107, 619) mit der zweiten Daten-Schnittstelle (111, 206) gekoppelt ist;
wobei der erste Parallel-/Seriellwandler (104, 622) und der zweite Parallel-/Seriellwandler (107, 619) zum Senden bzw. zum Empfangen paralleler Daten eingerichtet ist; und wobei die erste Daten-Schnittstelle (101, 205) und die zweite Daten-Schnittstelle (111, 206) kommunizierfähig gekoppelt sind
indem der zumindest eine erste Parallel-/Seriellwandler und der zumindest eine zweite Parallel-/Seriellwandler ausgebildet sind, untereinander Daten seriell zu übertragen.

2. Schaltungsanordnung nach Anspruch 1, ferner aufweisend
ein galvanisches Trennelement (108, 616);
wobei die erste Daten-Schnittstelle (101, 205) und zweite Daten-Schnittstelle (111, 206) über das galvanische Trennelement (108, 616) kommunizierfähig gekoppelt sind.

3. Schaltungsanordnung nach Anspruch 1 oder 2, wobei der erste Parallel-/Seriellwandler (104, 622) und/oder der zweite Parallel-/Seriellwandler (107, 619) als Low Voltage Differential Signaling Bauteil ausgebildet ist.

4. Schaltungsanordnung nach einem der Ansprüche 1 bis 3,
wobei die erste Daten-Schnittstelle (101, 205) einen ersten SchnittstellenTreiber (104, 623) aufweist.

5. Schaltungsanordnung nach einem der Ansprüche 1 bis 4,
wobei die zweite Daten-Schnittstelle (111, 206) einen zweiten SchnittstellenTreiber (110, 603) aufweist.

6. Schaltungsanordnung nach einem der Ansprüche 1 bis 5,
wobei die erste Daten-Schnittstelle (101,205) eine USB-Schnittstelle oder eine RS.232 Schnittstelle ist.

7. Schaltungsanordnung nach einem der Ansprüche 1 bis 6,
wobei die zweite Daten-Schnittstelle (111, 206) mindestens eine Schnittstelle ausgewählt aus der Gruppe HART®-Bus-, VBUS-, Feldbus- oder I²C-Bus-Schnittstelle ist.

8. Schaltungsanordnung nach einem der Ansprüche 1 bis 7,
wobei die zumindest eine Datenspeichereinrichtung (112, 608) ein Flash NAND Speicher ist.

9. Schaltungsanordnung nach einem der Ansprüche 2 bis 8, ferner aufweisend:
ein weiteres galvanisches Trennelement (627);
wobei das weitere galvanische Trennelement (627) ausgebildet ist, eine Energiezufuhr der Schaltungsanordnung galvanisch zu trennen.

10. Schaltungsanordnung nach einem der Ansprüche 2 bis 9,
wobei das galvanische Trennelement (108, 616) zumindest einen Kondensator aufweist.

11. Datenlogger mit einer Schaltungsanordnung nach einem der Ansprüche 1 bis 10, zum Übertragen von Daten zwischen einem Steuergerät (201) und einem Feldgerät (203).

12. Feldgerät-Anordnung mit einem Feldgerät (203) und mit einer Schaltungsanordnung (100) nach einem der Ansprüche 1 bis 10 oder mit einem Feldgerät (203) und mit einem Datenlogger (202) nach Anspruch 11.

13. Feldgerät-Anordnung nach Anspruch 12, wobei das Feldgerät ausgewählt ist aus der Gruppe bestehend aus einem Füllstandsmessgerät, einem Druckmessgerät und einem Radarmessgerät.

14. Verfahren zum seriellen Übertragen von Daten zwischen einer ersten an ein Steuergerät gekoppelten Datenschnittstelle und einer zweiten an ein Feldgerät gekoppelten Datenschnittstelle, wobei das Verfahren aufweist:
Wandeln von parallel zur Verfügung stehenden Daten in einen seriellen Datenstrom in einem ersten Parallel-/Seriellwandler (104,622);
Wandeln des seriellen Datenstroms in parallele Daten in einem zweiten Parallel-/Seriellwandler (107, 619);
wobei der zumindest eine erste Parallel-/Seriellwandler (104, 622) mit der ersten Daten-Schnittstelle (101, 205) gekoppelt ist; und
wobei der zumindest eine zweite Parallel-/Seriellwandler (107, 619) mit der zweiten Daten-Schnittstelle (111, 206) gekoppelt ist;
wobei der erste Parallel-/Seriellwandler (104, 622) und der zweite Parallel-/Seriellwandler (107, 619) zum Senden bzw. zum Empfangen paralleler Daten zur bzw. von der ersten bzw. zweiten Datenschnittstelle eingerichtet sind;
serielles Übertragen der Daten zwischen der ersten Datenschnittstelle (101, 205) und der zweiten Daten-Schnittstelle (111, 206) mittels des ersten Parallel-/Seriellwandlers und des zweiten Parallel-/Seriellwandlers;
bedarfsweises Speichern der zwischen der ersten Daten-Schnittstelle und der zweiten Daten-Schnittstelle zu übertragenden Daten in einem Datenspeicher (112, 608).

15. Verfahren nach Anspruch 14, ferner aufweisend:
galvanisches Trennen der ersten Daten-Schnittstelle (101, 205) und der zweiten Daten-Schnittstelle (111, 206) mittels eines galvanischen Trennelements (108, 616);
Wandeln eines parallelen Signals in ein serielles Signal;
serielles Übertragen von Daten zwischen der ersten (101, 205) und der zweiten Daten-Schnittstelle (111, 206) über das galvanische Trennelement (108, 616).

## Claims

1. A circuit arrangement for transmitting data between a field unit and a control device, comprising:
a first data interface (101, 205) couplable to the control device (201);
a second data interface (111, 206) couplable to the field unit (203);
at least one data storage device (112);
wherein at least one data interface (101, 111) of the group of the first data interface (101, 205) and the second data interface (111, 206) is connected to the at least one data storage device (112);
wherein the at least one data storage device (112) is designed for recording data of at least one data interface of the group consisting of the first data interface (101, 205) and the second data interface (111, 206) on demand,
**characterized in**, the circuit arrangement further comprising at least a first parallel/serial converter (104, 622);
at least a second parallel/serial converter (107, 619);
wherein the at least one first parallel/serial converter (104, 622) is coupled to the first data interface (101, 205); and
wherein the at least one second parallel/serial converter (107, 619) is coupled to the second data interface (111, 206);
wherein the first parallel/serial converter (104, 622) and the second parallel/serial converter (107, 619) are for transmitting or receiving parallel data; and
wherein the first interface (101, 205) and the second data interface (111, 206) are coupled in a communicating fashion;
by designing the at least one first parallel/serial converter and the at least one second parallel/serial converter for transmitting data between one another in a serial fashion.

2. The circuit arrangement of claim 1, further comprising
a galvanic isolator (108, 616);
wherein the first data interface (101, 205) and the second data interface (111, 206) are coupled in a communicating fashion via the galvanic isolator (108, 616).

3. The circuit arrangement of claim 1 or 2, wherein the first parallel/serial converter (104, 622) and/or the second parallel/serial converter (107, 619) is realized in the form of a Low Voltage Differential Signal component.

4. The circuit arrangement of one of claims 1 to 3,
wherein the first data interface (101, 205) comprises a first interface driver (104, 623).

5. The circuit arrangement of one of claims 1 to 4,
wherein the second data interface (111, 206) comprises a second interface driver (110, 603).

6. The circuit arrangement of one of claims 1 to 5,
wherein the first data interface (101, 205) is a USB interface or an RS.232 interface.

7. The circuit arrangement of one of claims 1 to 6,
wherein the second data interface (111, 206) is at least one interface that is selected from the group of HART® bus interface, VBUS interface, field bus interface or I²C bus interface.

8. The circuit arrangement of one of claims 1 to 7,
wherein the at least one data storage device (112, 608) is a Flash NAND memory.

9. The circuit arrangement of one of claims 2 to 8, further comprising:
a further galvanic isolator (627);
wherein the further galvanic isolator (627) is designed for galvanically isolating an energy supply of the circuit arrangement.

10. The circuit arrangement of one of claims 2 to 9,
wherein the galvanic isolator (108, 616) comprises at least one capacitor.

11. A data logger with a circuit arrangement of one of claims 1 to 10 for transmitting data between a control device (201) and a field unit (203).

12. A field unit arrangement having a field unit (203) and having a circuit arrangement (100) of one of claims into 10 , or having a field unit (203) and having a data logger of claim 11.

13. The field unit arrangement of claim 12, wherein the field unit is selected from the group consisting of a level gauge, a pressure gauge and a radar measuring device.

14. A method for serially transmitting data between a first data interface coupled to a control device and a second data interface coupled to a field device, wherein the method comprises:
converting data made available in the form of parallel data into a serial data stream in a first parallel/serial converter (104, 622);
converting the serial data stream into parallel data in a second parallel/serial converter (107,619);
wherein the at least one first parallel/serial converter (104, 622) is coupled to the first data interface (101, 205); and
wherein the at least one second parallel/serial converter (107, 619) is coupled to the second data interface (111, 206);
wherein the first parallel/serial converter (104, 622) and the second parallel/serial converter (107, 619) are adapted for transmitting or receiving parallel data to respectively from the first data interface or the second data interface;
serially transmitting the data between the first data interface (101, 205) and the second data interface (111, 206) by the first parallel/serial converter and the second parallel/serial converter;
on demand storing of the data to be transmitted between the first data interface and the second data interface in a data memory (112, 608).

15. The method of claim 14, further comprising:
galvanic insolating of the first data interface (101, 205) and the second data interface (111, 206) by using a galvanic isolator (108, 616);
converting of a parallel signal into a serial signal;
serially transmitting of data between the first (101, 205) and the second data interface (111, 206) via the galvanic isolator (108, 616).

## Revendications

1. Montage pour la transmission de données entre un appareil de terrain et un appareil de commande, comprenant :
une première interface de données (101, 205) pour le couplage à l'appareil de commande (201) ;
une seconde interface de données (111, 206) pour le couplage à l'appareil de terrain (203) ;
au moins un dispositif de mémorisation de données (112) ;
au moins une interface de données (101, 111) du groupe de la première interface de données (101, 205) et de la seconde interface de données (111, 206) étant reliée à le au moins un dispositif de mémorisation de données (112) ;
le au moins un dispositif de mémorisation de données (112) étant réalisé pour enregistrer en cas de besoin des données d'au moins une interface de données du groupe constitué de la première interface de données (101, 205)
et de la seconde interface de données (111, 206) ;
**caractérisé en ce que** le montage comprend en outre
au moins un premier convertisseur parallèle-série (104, 622) ;
au moins un second convertisseur parallèle-série (107, 619) ;
le au moins un premier convertisseur parallèle-série (104, 622) étant couplé à la première interface de données (101, 205) ; et
le au moins un second convertisseur parallèle-série (107, 619) étant couplé à la seconde interface de données (111, 206) ;
le premier convertisseur parallèle-série (104, 622) et le second convertisseur parallèle-série (107, 619) étant conçus pour l'émission et/ou la réception de données parallèles ; et
la première interface de données (101, 205) et la seconde interface de données (111, 206) étant couplées en communication ;
le au moins un premier convertisseur parallèle-série et le au moins un second convertisseur parallèle-série étant réalisés pour la transmission mutuelle de données en série.

2. Montage selon la revendication 1, comprenant en outre un élément de coupure galvanique (108, 616) ;
la première interface de données (101, 205) et la seconde interface de données (111, 206) étant couplées en communication par l'intermédiaire de l'élément de coupure galvanique (108, 616).

3. Montage selon l'une des revendications 1 ou 2, dans lequel le premier convertisseur parallèle-série (104, 622) et/ou le second convertisseur parallèle-série (107, 619) sont réalisés sous forme de composant Low Voltage Differential Signaling.

4. Montage selon l'une des revendications 1 à 3, dans lequel la première interface de données (101, 205) présente un premier pilote d'interface (104, 623).

5. Montage selon l'une des revendications 1 à 4, dans lequel la seconde interface de données (111, 206) présente un second pilote d'interface (110, 603).

6. Montage selon l'une des revendications 1 à 5, dans lequel la première interface de données (101, 205) est une interface USB ou une interface RS.232.

7. Montage selon l'une des revendications 1 à 6, dans lequel la seconde interface de données (111, 206) est au moins une interface sélectionnée parmi le groupe d'interface bus HART®, VBUS, bus de champ ou bus I²C.

8. Montage selon l'une des revendications 1 à 7, dans lequel le au moins un dispositif de mémorisation de données (112, 608) est une mémoire Flash NAND.

9. Montage selon l'une des revendications 2 à 8, comprenant en outre :
un élément de coupure galvanique supplémentaire (627) ;
l'élément de coupure galvanique supplémentaire (627) étant réalisé pour la séparation galvanique d'une alimentation en énergie du montage.

10. Montage selon l'une des revendications 2 à 9, dans lequel l'élément de coupure galvanique (108, 616) présente un moins un condensateur.

11. Enregistreur de données avec un montage selon l'une des revendications 1 à 10, pour la transmission de données entre un appareil de commande (201) et un appareil de champ (203).

12. Agencement d'appareil de terrain avec un appareil de terrain (203) et un montage (100) selon l'une des revendications 1 à 10 ou avec un appareil de terrain (203) et un enregistreur de données (202) selon la revendication 11.

13. Agencement d'appareil de terrain selon la revendication 12, dans lequel l'appareil de terrain est sélectionné parmi le groupe constitué d'un appareil de mesure de niveau, d'un appareil de mesure de pression et d'un appareil de mesure radar.

14. Procédé de transmission sérielle de données entre une première interface de données, couplée à un appareil de commande, et une seconde interface de données, couplée à un appareil de terrain, le procédé comprenant les étapes :
conversion de données, disponibles en parallèle, en un flux de données sériel dans un premier convertisseur parallèle-série (104, 622) ;
conversion du flux de données sériel en données parallèles dans un second convertisseur parallèle-série (107, 619);
le au moins un premier convertisseur parallêle-série (104, 622) étant couplé à la première interface de données (101, 205) ; et
le au moins un second convertisseur parallèle-série (107, 619) étant couplé à la seconde interface de données (111, 206) ;
le premier convertisseur parallèle-série (104, 622) et le second convertisseur parallèle-série (107, 619) étant conçus pour l'émission et/ou la réception de données parallèles à la première et/ou la seconde interface et/ou de la première et/ou la seconde interface ;
transmission sérielle des données entre la première interface de données (101, 205) et la seconde interface de données (111, 206) au moyen du premier convertisseur parallèle-série et du second convertisseur parallèle-série ;
mémorisation en cas de besoin, dans une mémoire de données (112, 608), des données à transmettre entre la première interface de données et la seconde interface de données.

15. Procédé selon la revendication 14, comprenant en outre la séparation galvanique de la première interface de données (101, 205) et de la seconde interface de données (111, 206) au moyen d'un élément de coupure galvanique (108, 616) ;
la conversion d'un signal parallèle en un signal en série ;
la transmission sérielle de données entre la première interface (101, 205) et la seconde interface (111, 206) de données par l'intermédiaîre de l'élément de coupure galvanique (108, 616).
